# EUROPÄISCHE PATENTSCHRIFT

(11) **EP 1 886 123 B1**
(45) Veröffentlichungstag und Bekanntmachung des Hinweises auf die Patenterteilung: **14.01.2015**
(21) Anmeldenummer: 06791515.7
(22) Anmeldetag: 19.05.2006
(51) Int. Cl.: G01N 21/35, G01N 21/89, G01N 21/84, G01N 21/86

(54) **VORRICHTUNG UND VERFAHREN ZUR ERFASSUNG UND BEWERTUNG VON HYGROSKOPISCHEN MATERIALIEN**
DEVICE AND METHOD FOR DETECTING AND EVALUATING HYGROSCOPIC MATERIALS
DISPOSITIF ET PROCEDE DE DETECTION ET D'EVALUATION DE MATERIAUX HYGROSCOPIQUES

(30) Priorität: 19.05.2005 DE 102005023160
(43) Veröffentlichungstag der Anmeldung: 13.02.2008
(73) Patentinhaber: Beltz, Robert, 04329 Leipzig (DE)
(72) Erfinder: Beltz, Robert, 04329 Leipzig (DE)
(74) Vertreter: Fleuchaus, Michael A.
(86) Internationale Anmeldenummer: PCT/EP2006/004788
(87) Internationale Veröffentlichungsnummer: WO 2006/136249

(56) Entgegenhaltungen:
- WO-A2-02/101363
- DE-A1- 19 709 963
- US-B1- 6 452 679
- US-B1- 6 548 812

## Beschreibung

Die vorliegende Erfindung betrifft eine Vorrichtung und ein Verfahren zur spektrometrischen Erfassung und Bewertung des klimabedingten Zustandes von hygroskopischen Materialien, insbesondere von faserhaltigen Materialien wie Papier, Pappe und Karton.

Solche Vorrichtungen und Verfahren sind im Stand der Technik bekannt.

So zeigt beispielsweise die deutsche Offenlegungsschrift DE 197 09 963 die Verwendung eines im Nahinfrarot Wellenlängenbereich arbeitenden Spektrometers zur Überwachung der Produktion von flachen Materialien. Hierbei wird einem Spektrometer, mittels einer Faseroptik das von dem flachen Material diffus reflektierte Licht für die Reflektionsspektroskopie zugeführt. Mit dieser Vorrichtung wird eine Online-Prozesskontrolle bereit gestellt, bei welchem kontinuierlich Inhaltsstoffe überwacht werden. Darüber hinaus ist auch in der US 6,548,812 eine Vorrichtung zur Bestimmung von Materialeigenschaften, in der US 6,452,679 eine Vorrichtung zur Steuerung der Qualität eines sich bewegenden Bahn und in der WO 02/101363 eine Vorrichtung und ein Verfahren zur Stabilitätsbestimmung von Substanzen und Formulierungen bekannt.

Es ist jedoch nachteilig, dass mittels einer solchen Vorrichtung, wie sie im Stand der Technik bekannt ist, Parameter, die nicht unmittelbar durch den Herstellungsprozess selbst beeinflusst werden, für die Auswertung nicht berücksichtigt werden.

So ist beispielsweise bekannt, dass insbesondere bei der Verwendung von hygroskopischen Materialien wie beispielsweise Fasern, insbesondere Zellulosefasern, Holzfasern oder Textilfasern und dergleichen das gemessene Spektrum durch den jeweiligen Feuchtzustand des zu untersuchenden Materials signifikant beeinflusst wird.

Aus diesem Grund ist es bei der Verarbeitung von flächigen Werkstoffen wie z. B. Papier oder Folien nicht ausreichend, von konstanten Klimabedingungen auszugehen, so dass insbesondere für die Auswertung der Reflektionssspektren wenigstens eine zusätzliche Information bezüglich der Klimaeigenschaften, in welchen das Material erzeugt bzw. verarbeitet wird, berücksichtigt werden sollte.

Es ist im Stand der Technik bekannt, diese Information beispielsweise dadurch zu erhalten, dass die Materialbahn unter definierten Klimabedingungen außerhalb des Produktionsprozesses untersucht wird. Hierzu werden bevorzugt Klimaräume verwendet, in denen die zu untersuchenden Papierproben über eine vorgegebene Zeit klimatisiert werden, um insbesondere durch definierte Klimabedingungen den Einfluss auf das zu untersuchende Material für Vergleiche weitgehend auszuschließen.

Dies hat jedoch den Nachteil, dass solche Klimabedingungen insbesondere bei der Herstellung bzw. Verarbeitung von Massenerzeugnissen wie beispielsweise Papier im Produktionsprozess nicht unmittelbar zur Verfügung stehen bzw. eine mit Fehlern behaftete Information zur Verfügung stellen.

Es besteht somit der Wunsch, bei der Verarbeitung oder Herstellung von solchen, insbesondere hygroskopischen Materialien eine kontinuierliche Überwachung der Qualität des erzeugten bzw. zu verarbeitenden Produkts bereitzustellen, bei welchen dieser Einfluss wenigstens teilweise berücksichtigt wird.

Die Aufgabe wird durch eine Vorrichtung gemäß Anspruch 1 gelöst. Ferner wird die Aufgabe auch durch ein Verfahren gemäß Anspruch 10 gelöst. Bevorzugte Ausführungsformen der Vorrichtung bzw. des Verfahrens sind Gegenstand der Unteransprüche. Anspruch 11 betrifft die Verwendung der erfindungsgemäßen Vorrichtung zur Untersuchung von speziellen Materialien.

Die Erfindung stellt eine Vorrichtung bzw. ein Verfahren bereit, welche die im Stand der Technik bekannten Nachteile wenigstens teilweise reduziert und insbesondere eine kostengünstige und einfach handzuhabende Vorrichtung bereit stellt, die sowohl bei der Produktion von spezifischen Materialien, als auch bei der Verarbeitung dieser Materialien eingesetzt werden kann.

Die erfindungsgemäße Vorrichtung zur Erfassung und Bewertung des klimabedingten Zustandes von hygroskopischen Materialien, insbesondere von faserhaltigen Materialien wie beispielsweise Papier, Pappen, Karton, Kunststoffen, insbesondere Kunststofffolien, weist wenigstens eine Nahinfrarotspektroskopieeinrichtung auf, mittels welcher ein Reflektionsspektrum des zu untersuchenden Materials bereit gestellt wird. Die Nahinfrarotspektroskopieeinrichtung ist entweder mit einer zentralen Erfassungs- und Auswerteeinrichtung verbunden oder es ist eine Erfassungs- und Auswerteeinrichtung in die Nahinfrarotspektroskopieeinrichtung integriert. Die Vorrichtung weist wenigstens einen Sensor auf, der wenigstens die Luftfeuchtigkeit in unmittelbarer Nähe des zu untersuchende Material bestimmt.

Als Klimaeigenschaften werden gemäß der vorliegenden Erfindung insbesondere Eigenschaftswerte angesehen, welche beispielsweise die Temperatur, die Kühlgrenztemperatur, die Feuchte wie beispielsweise die absolute Feuchte oder die relative Feuchte, den Druck wie beispielsweise den Luftdruck, dynamische und/oder statische Zustandsänderungen der Klimaeigenschaften im Untersuchungsprogramm und/oder dem Material, Kombinationen hieraus und dergleichen beinhaltet. Es liegt selbst-verständlich auch im Sinn der vorliegenden Erfindung, weitere spezifische Kenndaten zu erfassen, um diese insbesondere für die Auswertung der Reflektionsspektren bereit zustellen.

Als Spektroskopieeinrichtung werden gemäß der vorliegenden Erfindung Einrichtungen verstanden, die insbesondere aus dem Bereich der Molekülspektroskopie ausgewählt werden. Dieses ist beispielsweise die optische Spektroskopie, weiche im Wellenlängenbereich zwischen 200 nm bis 500.000 nm durchgeführt wird. Hierbei wird insbesondere zwischen dem Nah-Infrarotbereich, d. h. 200 nm bis 2.500 nm, dem mittleren oder klassischen Infrarotbereich, d. h. 2.500 nm bis 50.000 nm und dem Fern-Infrarotbereich 50.000 nm bis 500.000 nm unterschieden. Diese Unterscheidung ist insbesondere darin begründet, dass unterschiedliche Phänomene der Lichtabsorption in dem jeweiligen Wellenlängenbereich auftreten. So sind im Fern-Infrarotbereich Insbesondere die Molekülrotation, im Mittelinfrarotbereich die Mole-külbindung und im Nah-Infrarotbereich insbesondere die Obertöne bzw. Kombinations-schwingungen des mittleren Infrarotbereichs (insbesondere von CH-, OH-, NH-Bindungen) detektierbar.

Anordnungen, die nicht im Rahmen der beanspruchten Erfindung liegen, verwenden beispielsweise die Fluoreszenzspektroskopie, die Kernresonanzspektroskopie, Mikrowellenspektroskopie, Raman-Spektrometer, Terahertz-Puls-Imaging Spektrometersysteme, Ultrakurz-Spektroskopie, Laserspektroskopie, Kombinationen hieraus und dergleichen. Diese Spektroskopieverfahren sind im wesentlichen im Stand der Technik bekannt, so dass weitere Ausführungen zu den einzelnen Spektroskopieverfahren im Detail nicht vorgenommen werden.

Neben den verwendeten Spektroskopie-Einrichtungen ist es gemäß der vorliegenden Erfindung notwendig, mittels wenigstens einem Sensor die Luftfeuchtigkeit in unmittelbarer Nähe des zu untersuchenden Materials, als wenigstens eine Klimaeigenschaft zu erfassen.

Als Klimaeigenschaft wird gemäß der vorliegenden Erfindung insbesondere ein Raumklima verstanden, welches das zu erzeugende Produkt bzw. das zu verarbeitende Produkt im Prozess umgibt. Die Klimaeigenschaften werden gemäß der vorliegenden Erfindung mittels Sensoren bestimmt, welche dem Grunde nach im Stand der Technik bekannt sind. So wird die Temperatur beispielsweise mit PT 100, PTC-Sensoren oder NTC-Sensoren bestimmt. Auch Drucksensoren bzw. Sensoren zur Bestimmung der absoluten oder relativen Feuchte sind im Stand der Technik bekannt und können für die Bestimmung einer oder einer Vielzahl von Klimaeigenschaften verwendet werden.

Wenigstens ein Sensor bzw. Kombinationen aus solchen Sensoren werden gemäß der vorliegenden Erfindung in unmittelbarer Nähe mit einem Abstand zwischen ~0 cm und 10 cm, insbesondere 0,5 cm von der Probe bzw. dem zu verarbeitenden Material angeordnet.

Mit diesem ersten Sensor wird die Luftfeuchtigkeit, als wenigstens ein Klimazustand in unmittelbarer Nähe des zu untersuchenden Materials bestimmt, wobei der Abstand insbesondere so gewählt wird, dass eine unmittelbare Berührung mit dem Material selbst nicht statt findet. Es können jedoch Vorkehrungen getroffen werden, welche insbesondere einen konstanten Abstand sicher stellen bzw. durch welche eine ausreichende Umspülung des Sensors mit der klimabestimmenden Umgebungsluft des Materials sicherestellt ist.

Gemäß einer weiteren besonders bevorzugten Ausführungsform wird wenigstens ein weiterer Sensor mit einem vorgegebenen Abstand vorzugsweise größer 10 cm von der Probe angeordnet. Insbesondere kann durch die Verwendung zweier Sensoren bzw. zweier Sensorkombinationen nicht nur das Klima unmittelbar im Bereich des zu verarbeitenden Materials, sondern auch das Raumklima insgesamt bestimmt werden, sodass auch eine Aussage bezüglich der Gleichgewichtsfeuchte im Raum ermittelt wird.

Ferner kann gemäß der vorliegenden Erfindung auch das zu ermittelnde Reflektionsspektrum als weiteres Maß für das Klima verwendet werden, insbesondere wenn mit der Infrarot-Spektroskopie der Feuchteanteil unmittelbar durch die Konstanz einer vorgegebenen Anzahl von Messungen, d.h. Reflektionssprektren ermittelt wird. Liegen die Messergebnisse in einem vorgegebenen Toleranzbereich, so handelt es sich um eine, im Klimagleichgewicht befindliche Materialprobe bzw. Materialbahn, wobei größere Unterschiede in den zeitlich aufeinander folgenden Spektren auf einen noch andauernden Ausgleich zwischen dem

Umgebungsklima und dem Zustand des zu untersuchenden bzw. zu verarbeitenden und hergestellten Materials hinweisen.

Der Abstand bzw. die Veränderung des Abstands kann über die Zeit auch als Maß für die dynamische Anpassungsfähigkeit des Materials an einen vorgegebenen Umgebungszustand d.h. eine Klimasituation verstanden werden, wobei sowohl der Abstand als auch die Anpassungsdynamik durch die Differenz zwischen Raumklima und Zustand des zu untersuchenden Materials bestimmt wird.

Es liegt somit auch im Sinn der vorliegenden Erfindung, mittels der verwendeten Sensoren und des Abgleichs der Spektren eine Aussage über den Einfluss der absoluten bzw. relativen Feuchte auf das zu untersuchende Material zu erlangen.

Gemäß einer weiteren besonders bevorzugten Ausführungsform der vorliegenden Erfindung werden die Reflektions-, Transmissions oder Transflektionsspektren einer Spektroskopieeinrichtung mittels der Klimabestimmung normiert. Als Normierung wird hierbei verstanden, dass mittels gefundener Zusammenhänge die ermittelten Spektren auf eine definierte Klimabedingung umgerechnet werden. Diese Klimadaten können beispielsweise so gewählt werden, dass Laborwerte von klimatisierten Papierproben als Vergleichswerte herangezogen werden.

Es liegt auch im Sinn der vorliegenden Erfindung, insbesondere physikalische Eigenschaften und Zustandsgrößen der zu untersuchenden Materialien wie beispielsweise die qualitative und quantitative Zusammensetzung des Materials zu bestimmen. Das grundsätzliche Verfahren zur Detektion von Materialeigenschaften mittels der Spektroskopieverfahren ist im Stand der Technik bekannt, wobei insbesondere durch die Verwendung der Infrarot-Spektroskopie sowohl die Art der verwendeten Einzelkomponenten, als auch der quantitative Anteil der Einzelkomponenten in einem Produkt u.a. durch Vergleich der gemessenen Spektroskopiedaten mit Referenzdaten aus einer Datenbank und/oder einer Datei ermittelt werden kann. Die Bestimmung dieser Daten ist unter definierten Bedingungen möglich, so dass sowohl die Produktqualität, als auch in Bezug auf die nachfolgenden Verarbeitungsstufen Qualitätseigenschaften überwacht werden können.

So ist beispielsweise bei der Verarbeitung von flächigen Materialien wie beispielsweise Papier eine Qualitätsüberwachung möglich, insbesondere wenn sich durch den Produktionsprozess bzw. durch die Auswahl des erzeugten Papiers für eine nachfolgende Verarbeitungsstufe die Zusammensetzung bzw. Verteilung der verwendeten Materialien in dem zu verarbeitenden Produkt verändert.

Dies kann am Beispiel von Papier dahingehend erfolgen, dass mittels Spektroskopie sowohl der Anteil an organischen, anorganischen Bestandteilen, als auch Qualitätseigenschaften wie die Festigkeit und dergleichen bestimmt werden. So kann bei Papier oder Karton-/Pappenprodukten beispielsweise der Anteil an zelluloshaltigen Fasern oder holzhaltigen Fasern und der Anteil an Pigmenten bzw. Füllstoffen und Hilfsstoffen, Hilfsmitteln bzw. Additiven bestimmt werden.

Die Aufgabe der vorliegenden Erfindung wird auch durch ein Verfahren zur spektralen Bestimmung von physikalischen Eigenschaften spezifischer Materialien gelöst, welche neben der Bestimmung des Reflexionsspektrums die Bestimmung des Raumklimas mittels wenigstens eines Sensors umfasst. Aus den hierbei erhaltenen Daten des Remissionsspektrums und des Raumklimas wird ein normiertes Spektrum in Bezug auf ein vorbestimmtes Klimaniveau bestimmt. Bevorzugt werden diese Daten mit Referenzspektren aus z.B. einer Datenbank und/oder Datei verglichen, um somit eine Aussage über den Zustand des untersuchten Materials, als auch bezüglich dessen physikalischen Eigenschaften zu erhalten.

Ferner ist es auch im Sinn der vorliegenden Erfindung, die zuvor beschriebene Vorrichtung zur Bestimmung von physikalischen Eigenschaften von Materialien zu verwenden, welche beispielsweise faserhaltige Materialien wie Papier, Karton, Pappen, Zellstoffe sind, die insbesondere natürliche und/oder künstliche Faserstoffe aufweisen. Auch gestrichene oder Naturpapiere bzw. Kartonagen und Pappen, Verbundwerkstoffe, Textilien, Keramiken, organische Mineralmaterialien wie z. B. Karbonate, Kaoline, Silikate und dergleichen, Folien aus natürlichen oder synthetischen Kunststoffen, flüssige Materialien wie beispielsweise Öle, Kombinationen hieraus und dergleichen können mittels der erfindungsgemäßen Vorrichtung untersucht werden.

Die Erfindung wird nachfolgend anhand eines Beispiels zur Untersuchung von Papier beschrieben. Es sei jedoch darauf hingewiesen, dass die Erfindung hierdurch nicht beschränkt wird, sondern insbesondere auch die Möglichkeit umfasst, für andere Materialien bzw. Herstellungsverfahren und Verarbeitungsverfahren eingesetzt zu werden.

So zeigen:
Fig. 1 eine schematische Darstellung der erfindungsgemäßen Vorrichtung;
Fig. 2 eine alternative Ausführungsform der erfindungsgemäßen Vorrichtung aus Fig. 1;
Fig. 3 die Anordnung der erfindungsgemäßen Vorrichtung an einer schematisch dargestellten Materialbahn;
Fig. 4 Reflexionsspektren im Nah-Infrarotbereich; und
Fig. 5 zeigt eine andereDarstellung des Spektrums aus Figur 4.

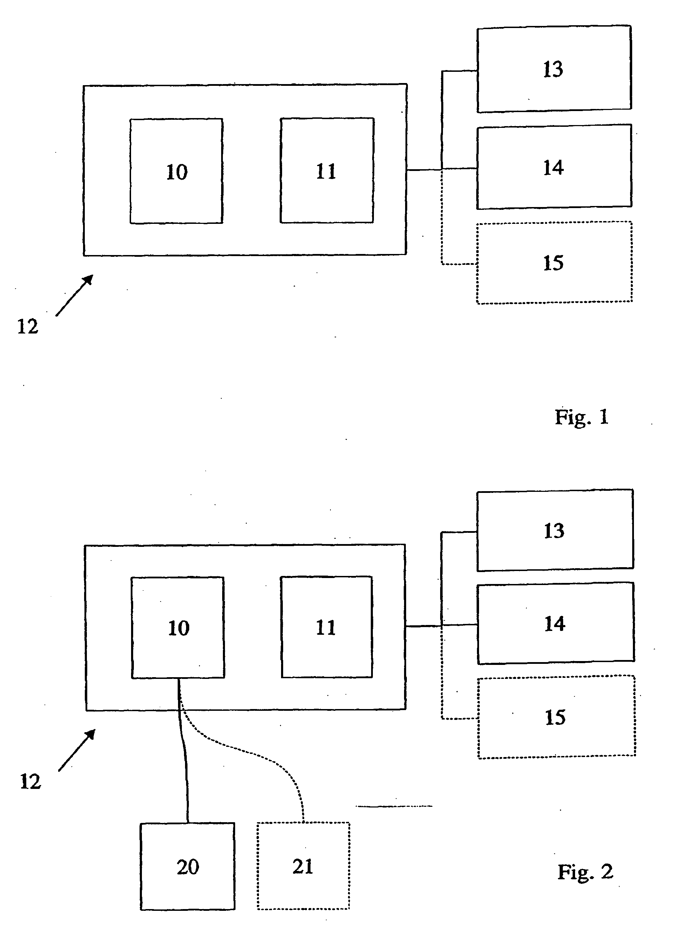

Fig. 1 zeigt eine Spektroskopieeinrichtung 12, welche neben dem Spektrometer 10 eine Erfassungs- und Auswertungseinrichtung 11 aufweist. Mit der Spektroskopieeinrichtung 12 sind gemäß der hier dargestellten Ausführungsform drei Sensoren 13, 14, 15 verbunden, welche gemäß der vorliegenden Erfindung beispielsweise die Feuchte, den Druck und die Temperatur eines Raumklimas erfassen. Es liegt auch im Sinn der vorliegenden Erfindung, dass der Sensor 13 beispielsweise nicht nur eine einzelne Eigenschaft des Klimas, sondern mehrere Eigenschaften in Kombination erfasst.

Wie in der Fig. 1 dargestellt, handelt es sich hierbei um drei Sensoren, wobei es auch im Sinn der vorliegenden Erfindung liegt, mehr als diese drei oder weniger als diese drei Sensoren zur Bestimmung des Klimas zu verwenden.

In Fig. 2 ist eine weitere Ausführungsform der erfindungsgemäßen Vorrichtung dargestellt, die um zwei Sensoren 20, 21 für die Spektroskopieeinrichtung ergänzt ist. Hierbei handelt es sich insbesondere um Sensoren zur Erfassung der Spektren, die gemäß einer besonders bevorzugten Ausführungsform beispielsweise im Falle von Infrarotspektren mit Lichtwellenteitern verbunden sind. Hierdurch kann der Sensor 20 oder 21 im Bereich der zu untersuchenden Probe bzw. des zu untersuchenden Materials angeordnet werden. Insbesondere bei der Verwendung solcher Messgeräte im Onlineprozess eines Herstellungsverfahrens kann bei einer geringenbaulichen Abmessung des Sensor, dieser nahe an das zu erzeugende oder zu verarbeitende Material herangeführt werden. Solche Sensoren wie z.B. Lichtwellenleiter und Messzellen sind im Stand der Technik bekannt und werden demzufolge im Rahmen der vorliegenden Erfindung nicht weiter beschrieben.

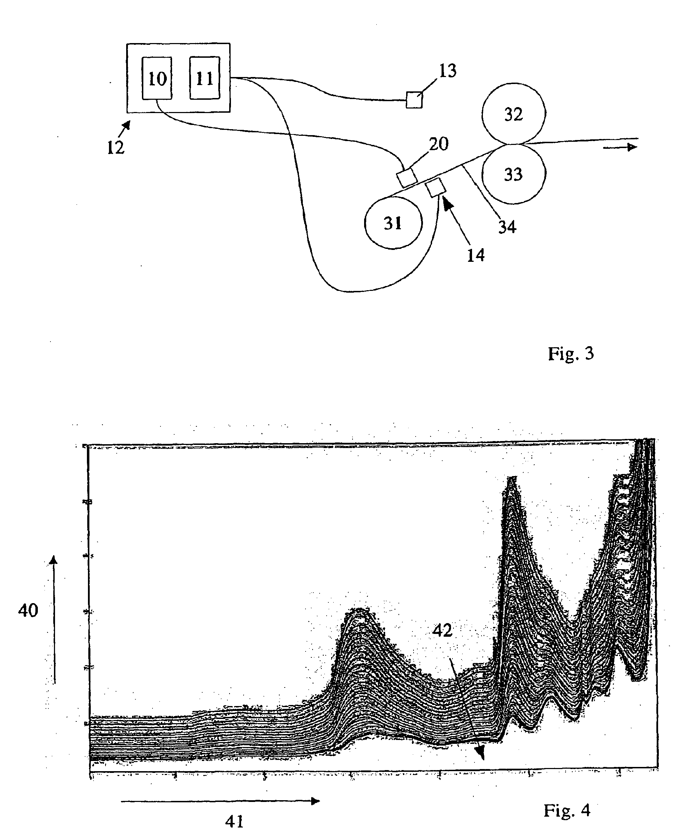

Fig. 3 ist eine beispielhafte Darstellung einer möglichen Anordnung verschiedener Sensoren 13, 14, 20 der Spektroskopieeinrichtung, wobei gemäß des vorliegenden Ausführungsbeispiels ein Klimasensor 13 mit einem vorgegebenen größeren Abstand von der zu untersuchenden Materialbahn 34 angeordnet ist. Es liegt selbstverständlich im Sinn der vorliegenden Erfindung, dass dieser Sensor im unmittelbaren Klimabereich des zu verarbeitenden Materials angeordnet ist. Der Sensor 14 ist gemäß der vorliegenden Erfindung deutlich näher an der Materialbahn 34 angeordnet, wobei gemäß einer besonders bevorzugten Ausführungsform der Abstand zwischen dem Messkopf und der Materialbahn zwischen 0,5 und 1 cm liegt. Hierdurch können sehr genau die Klimabedingungen am Papier bzw. im unmittelbaren Grenzbereich der Papierbahn bestimmt werden, um somit den Unterschied zwischen den Klimabedingungen im Raum mit einem entsprechenden Abstand, als auch im unmittelbaren Bereich am Papier selbst zu ermitteln.

Es liegt auch im Sinn der vorliegenden Erfindung eine solche Spektroskopieeinrichtung für die Bestimmung der Materialeigenschaften an einzelnen Proben wie z. B. Papierbögen zu verwenden.

Der Sensor 20 der unmittelbar zur Spektroskopie dient, ist mit der Spektroskopieeinrichtung 10 verbunden und liefert die Spektren des zu untersuchenden Materials. Gemäß der hier dargestellten Ausführungsform wird eine Papierbahn von der Position 31 Ober die Abnahme 32, 33 abgerollt, um sie im Anschluss in Pfeilrichtung beispielsweise einem Verarbeitungsprozess wie z. B. einem Druckprozess zuzuführen.

Obwohl in dem hier dargestellten Ausführungsbeispiel die Sensoren durch Leitungen mit der Spektroskopieeinrichtung verbunden sind, liegt es natürlich auch im Sinn der vorliegenden Erfindung, die Sensoren u.a. auch unmittelbar an der Spektroskopieeinrichtung anzuordnen oder Kombinationen hiervon zu verwenden oder andere Formen der Signalweiterleitung zu nutzen.

Fig. 4 zeigt ein Reflexionsspektrum einer Papierbahn, bei unterschiedlichen Klimabedingungen. Hierbei nimmt insbesondere die Feuchte Ober die Pfeilrichtung ab, wobei auf der X-Achse 41 der Wellenlängenbereich und auf der Y-Achse 40 die Intensität des erzeugten Remissionsspektrums abgebildet ist. Die Spektren zeigen steigend bzw. fallend das gleiche Papier mit unterschiedlichen Feuchteanteilen. Wie dargestellt, nimmt mit abnehmendem Feuchtegehalt der Abstand zwischen den einzelnen Spektren ab und erreicht im unteren Bereich der repräsentativ für einen dem Raumklima entsprechenden Gleichgewichtszustand des untersuchten Materials ist.

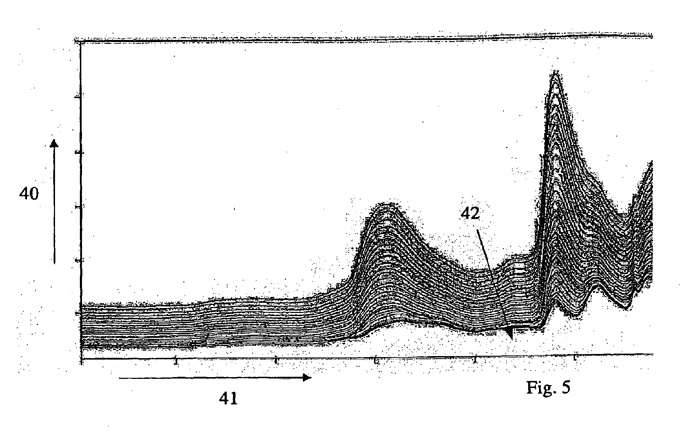

Entsprechendes ist auch in Fig. 5 dargestellt, wobei ein Ausschnitt des Reflektionsspektrums wiedergegeben ist.

## Patentansprüche

1. Vorrichtung zur kontinuierlichen spektrometrischen Erfassung und Bewertung eines klimaabhängigen Zustandes von hygroskopischen Materialien in einem Verarbeitungs- oder Herstellungsprozess, insbesondere von faserhaltigen Materialien wie Papier, Pappen und Karton, mit wenigstens einer Nahinfrarotspektroskopieeinrichtung (10, 12) zur Ermittlung eines Spektrums des zu untersuchenden Materials und einer Erfassungs- und Auswerteeinrichtung (11)
**dadurch gekennzeichnet, dass**
die Vorrichtung wenigstens einen ersten Sensor (14) zur Erfassung wenigstens der das zu untersuchende Material umgebenden Luftfeuchtigkeit als Klimaeigenschaft aufweist und der Sensor mit einem Abstand zwischen 0 und 10 cm zu dem zu untersuchenden Material angeordnet ist.

2. Vorrichtung gemäß Anspruch 1, **dadurch gekennzeichnet, dass**
ein weiterer Sensor (13, 15) zur Erfassung einer Klimaeigenschaft der Umgebungsluft des zu untersuchenden Materials, die aus einer Gruppe ausgewählt wird, welche die Temperatur, die Kühlgrenztemperatur, die Feuchte wie beispielsweise die absolute Feuchte, die relative Feuchte und den Druck wie beispielsweise den Luftdruck, dynamische und statische Zustände des Klimas im Untersuchungsraum und/oder dem Material und Kombinationen hieraus aufweist, vorgesehen ist.

3. Vorrichtung nach einem der vorstehenden Ansprüche, **dadurch gekennzeichnet, dass**
mittels des Spektrums wenigstens eine physikalische Eigenschaft des Materials, vorzugsweise die qualitative und quantitative Zusammensetzung des Materials, wie beispielsweise Anteil an organischen und anorganischen Bestandteilen, und insbesondere bei faserhaltigen Materialien den Anteil an Faserstoffen und deren Art, Pigmenten, Füllstoffen, Hilfsmittel, Additive, wie Binder, die Festigkeit wie beispielsweise die Bruchkraft, Dehnung, Biegesteifigkeit, die Elastizität, Reaktivität, Porosität, Verhornungsgrad des untersuchten Materials und Kombinationen hieraus bestimmt wird.

4. Vorrichtung nach einem der vorstehenden Ansprüche, **dadurch gekennzeichnet, dass**
der weitere Sensor (13, 15) für die Bestimmung wenigstens einer Klimaeigenschaft aus einer Gruppe von Sensoren ausgewählt wird, welche Temperatursensoren, Drucksensoren, Sensoren zur Bestimmung der absoluten und/oder relativen Feuchte, wie beispielsweise kapazitive Sensoren und Kombinationen hieraus aufweist.

5. Vorrichtung nach einem der vorstehenden Ansprüche, **dadurch gekennzeichnet, dass**
wenigstens der erste Sensor (14) in einem Abstand von 0,5 cm zu dem untersuchenden Material angeordnet ist.

6. Vorrichtung nach einem der vorstehenden Ansprüche, **dadurch gekennzeichnet, dass**
wenigstens ein zweiter Sensor (13) mit einem vorgegebenen Abstand
größer 10 cm von dem zu untersuchenden Material angeordnet ist.

7. Vorrichtung nach einem der vorstehenden Ansprüche, **dadurch gekennzeichnet, dass**
die Ausgangssignale des wenigstens einen Sensors und der Spektroskopieeinrichtung mittels der Erfassungseinrichtung (11) erfasst werden.

8. Vorrichtung nach Anspruch 7, **dadurch gekennzeichnet, dass**
das Spektrum der Spektroskopieeinrichtung (10, 12) unter Verwendung der Daten der Klimabestimmung normiert wird.

9. Vorrichtung nach einem der vorstehenden Ansprüche, **dadurch gekennzeichnet, dass**
die ermittelten Spektren mit den jeweiligen Werten der Klimabestimmung in einer Datenbank und/oder einer Datei abgelegt werden.

10. Verfahren zur spektralen Bestimmung von Materialien mit einer Vorrichtung gemäß einem der Ansprüche 1 bis 9 mit den Schritten
- Bestimmung eines Nahinfrarotspektrums eines Materials;
- Bestimmung wenigstens der das Material umgebenden Luftfeuchtigkeit als Klimaeigenschaft mit wenigstens einem Sensor (14);
- Normierung des Spektrums auf wenigstens eine vorgegebene Luftfeuchtigkeit;
- Vergleich der gemessenen Spektroskopiedaten mit Referenzspektren aus einer Datenbank und/oder einer Datei;
- Ausgabe von aus dem normiertem Spektrum und den Referenzspektren erhaltenen Kennwerten des untersuchten Materials.

11. Verwendung einer Vorrichtung gemäß einem der Ansprüche 1 bis 9 zur Bestimmung von physikalischen Eigenschaften von Materialien, wie beispielsweise faserhaltige Materialien, wie Papier, Karton, Pappen, Zellstoff, natürliche und/oder künstliche Faserstoffe, gestrichene oder natur Papiere, Verbundwerkstoffe, Textilien, Keramiken, anorganische Materialien wie z.B. Karbonate, Kaoline, Silikate etc., Folien, natürliche oder synthetische Kunststoffe, flüssige Materialien wie beispielsweise Öle und Kombinationen hieraus.

## Claims

1. An apparatus for continuous spectrometric detection and evaluation, in a processing or manufacturing process, of a climate-dependent state of hygroscopic materials, in particular of fibre-containing materials such as paper, paperboard and cardboard, the apparatus comprising at least one near-infrared spectroscopic device (10,12) for determining a spectrum of the material to be examined, and a detection and analysis device (11),
**characterized in that**
the apparatus includes at least a first sensor (14) for detecting as a climatic property at least the humidity of air surrounding the material to be examined, and the sensor is positioned at a distance of between 0 and 10 cm from the material to be examined.

2. The apparatus according to claim 1, **characterized in that**
an additional sensor (13,15) for detecting a climatic property of the air surrounding the material to be examined, which property is selected from a group including temperature, cooling limit temperature, humidity such as, for example, absolute humidity, relative humidity, and pressure such as, for example, air pressure, dynamic and static states of the climate in the examination room, and/or the material, and combinations thereof, is provided.

3. The apparatus of any preceding claim, **characterized in that**
there is determined, using the spectrum, at least one physical property of the material, preferably the composition of the material in terms of quality and quantity, such as, for example, its content of organic and inorganic constituents and, particularly for fibre-containing materials, the content and type of fibre materials, pigments, fillers, auxiliary materials, additives such as binders, the strength such as, for example, the breaking force, extension, bending stiffness, elasticity, reactivity, porosity, degree of hornification of the examined material, and combinations thereof.

4. The apparatus of any preceding claim, **characterized in that**
the additional sensor (13,15) for determining at least one climatic property is selected from a group of sensors including temperature sensors, pressure sensors, sensors for determining absolute and/or relative humidity such as, for example, capacitive sensors, and combinations thereof.

5. The apparatus of any preceding claim, **characterized in that**
at least the first sensor (14) is positioned at a distance of 0.5 cm from the material to be examined.

6. The apparatus of any preceding claim, **characterized in that**
at least a second sensor (13) is positioned at a predefined distance greater than 10 cm from the material to be examined.

7. The apparatus of any preceding claim, **characterized in that**
the output signals of the at least one sensor and the spectroscopic device are detected by means of the detection device (11).

8. The apparatus of claim 7, **characterized in that**
the spectrum of the spectroscopic device (10,12) is normalized using the data from determining the climate.

9. The device of any preceding claim, **characterized in that**
the spectrums found are stored, with the respective values from determining the climate, in a database and/or file.

10. A method of spectral determination of materials using the apparatus of any of claims 1 to 9, the method comprising the steps of
- determining a near-infrared spectrum of a material;
- determining as a climatic property at least the humidity of airsurrounding the material, with at least one sensor (14);
- normalizing the spectrum to at least one predefined humidity of air;
- comparing the measured spectroscopic data to reference spectrums from a database and/or file;
- outputting characteristic values of the examined material, which values are obtained from the normalized spectrum and the reference spectrums.

11. The use of the device of any of claims 1 to 9 for determining physical properties of materials such as, for example, fibre-containing materials such as paper, cardboard, paperboard, pulp, natural and/or artificial fibre materials, coated or uncoated papers, composite materials, textiles, ceramics, inorganic materials such as, for example, carbonates, kaolins, silicates etc., films, natural or synthetic plastics, liquid materials such as, for example, oils, and combinations thereof.

## Revendications

1. Dispositif destiné à la saisie spectrométrique et l'évaluation constantes d'un état dépendant du climat de matériaux hygroscopiques dans un processus de traitement ou de fabrication, notamment de matériaux à base de fibres comme le papier, le carton-pâte et le carton, avec au moins un équipement de spectroscopie par infrarouge proche (10, 12) en vue de la détection d'un spectre du matériau à examiner et d'un équipement de saisie et d'évaluation (11),
**caractérisé en ce que**
le dispositif présente au moins un premier capteur (14) en vue de la saisie d'au moins l'humidité atmosphérique environnant le matériau à examiner comme propriété climatique et **en ce que** le capteur est positionné avec un espace d'entre 0 et 10 cm par rapport au matériau à examiner.

2. Dispositif selon la revendication 1, **caractérisé en ce que**
un autre capteur (13, 15) en vue de la saisie d'une propriété climatique de l'air ambiant du matériau à examiner, qui est sélectionnée à partir d'un groupe qui présente la température, la température limite de refroidissement, l'humidité comme par exemple l'humidité absolue, l'humidité relative et la pression comme par exemple la pression atmosphérique, les états dynamiques et statiques du climat dans l'espace à examiner et/ou le matériau et des combinaisons de ceux-ci, est prévu.

3. Dispositif selon une quelconque des revendications précédentes, **caractérisé en ce que**
au moyen du spectre, au moins une propriété physique du matériau est déterminée, de préférence la composition qualitative et quantitative du matériau, comme par exemple la part de composants organiques et anorganiques, et notamment pour les matériaux à base de fibres, la part de matières fibreuses et leur type, les pigments, les matières de charge, les adjuvants, les additifs, comme les liants, la dureté comme par exemple la force de pli, l'extension, la rigidité flexionnelle, l'élasticité, la réactivité, la porosité, le degré d'encornement du matériau examiné et des combinaisons de ceux-ci.

4. Dispositif selon une quelconque des revendications précédentes, **caractérisé en ce que**
l'autre capteur (13, 15), en vue de la détermination d'au moins une propriété climatique, est sélectionné à partir d'un groupe de capteurs, qui présentent des capteurs de température, des capteurs de pression en vue de la pression absolue et/ou relative, comme par exemple des capteurs capacitifs et des combinaisons de ceux-ci.

5. Dispositif selon une quelconque des revendications précédentes, **caractérisé en ce que**
au moins le premier capteur (14) est disposé dans un espace de 0,5 cm par rapport au matériau à examiner.

6. Dispositif selon une quelconque des revendications précédentes, **caractérisé en ce que**
au moins un second capteur (14) est disposé avec un espace préconisé supérieur à 10 cm par rapport au matériau à examiner.

7. Dispositif selon une quelconque des revendications précédentes, **caractérisé en ce que**
les signaux de sortie d'au moins l'un des capteurs et de l'équipement de spectroscopie sont saisis au moyen du dispositif de saisie (11).

8. Dispositif selon la revendication 7, **caractérisé en ce que**
le spectre de l'équipement de spectroscopie (10, 12) est normalisé en utilisant les données de la définition du conditionnement.

9. Dispositif selon une quelconque des revendications précédentes, **caractérisé en ce que**
les spectres détectés sont déposés avec les valeurs respectives de la définition du conditionnement dans une base de données et/ou dans un fichier.

10. Procédé de définition spectrale des matériaux avec un dispositif selon une quelconque des revendications 1 à 9 avec les étapes de :
- Détermination d'un spectre d'infrarouge proche d'un matériau ;
- Détermination d'au moins l'humidité atmosphérique environnant le matériau comme propriété climatique avec au moins un capteur (14) ;
- Normalisation du spectre à au moins une humidité atmosphérique préconisée ;
- Comparaison des données de spectroscopie mesurées avec les spectres de références provenant d'une base de données et/ou d'un fichier ;
- Edition de valeurs caractéristiques du matériau examiné obtenues à partir du spectre normalisé et des spectres de référence.

11. Utilisation d'un dispositif selon une quelconque des revendications 1 à 9 en vue de la définition de propriétés physiques de matériaux, comme par exemple les matériaux à base de fibres, comme le papier, le carton, les cartons-pâtes, le cellulose, les matière fibreuses naturelles et/ou artificielles, les papiers couchés ou non couchés, les matériaux composites, les textiles, les céramiques, les matériaux anorganiques, comme par ex. les carbonates, les kaolins, les silicates etc., les films, les plastiques naturels ou synthétiques, les matériaux liquides comme par exemple les huiles et des combinaisons de ceux-ci.
